# EUROPEAN PATENT APPLICATION

(11) **EP 4 177 926 A1**
(43) Date of publication of application: **10.05.2023**
(21) Application number: 22205575.8
(22) Date of filing: 04.11.2022
(51) Int. Cl.: H01H 50/30, H01H 50/28

(54) **HIGH-VOLTAGE RELAY WITH IMPROVED MECHANICAL SHOCK TOLERANCE FOR A DRIVE OR CHARGING CIRCUIT OF AN ELECTRIC VEHICLE WITH A ROCKER AS AN ARMATURE**

(30) Priority: 08.11.2021 DE 102021129009
(71) Applicant: TE Connectivity Germany GmbH, 64625 Bensheim (DE)
(72) Inventor: KROEKER, Matthias, 12347 Berlin (DE); SANDECK, Peter, 12347 Berlin (DE); KOCH, Harry, 12347 Berlin (DE); RAHN, Bernd, 12347 Berlin (DE); HABUR, Fabian, 12347 Berlin (DE)
(74) Representative: Grünecker Patent- und Rechtsanwälte PartG mbB

(57) **Abstract**

The invention relates to a high-voltage relay (1) for a drive or charging circuit (41) of an electric vehicle. In order to configure the high-voltage relay (1) to be suitable for high currents as well as insensitive to shocks, the high-voltage relay (1) comprises a magnetic drive assembly (3) with two yokes (5, 7) spaced apart and an armature (17) which can be driven by the magnetic drive unit (3), wherein the armature (17) is configured as a rocker (19) which comprises two arms (21, 23) extending away from the first yoke (5) and which can be tilted between an open position (27) and a switching position (25) and is mounted on a first one (5) of the two yokes (5, 7), wherein a first one (21) of the two arms (21, 23) is provided with a switching contact assembly (39) and wherein a magnetic circuit (29) comprising the two yokes (5, 7) is closed in the switching position (25) by the second arm (23).

## Description

The invention relates to a high-voltage relay for a drive and/or charging circuit of an electric vehicle.

High electrical voltages are typically used in electric vehicles for the drive and charging components. High amperages can also arise during the charging process and during operation of a battery-electric vehicle. Charging stations with voltages of 400 V and 800 V are already widespread. Higher voltages are conceivable in the future. Currents of more than 15 kA can arise briefly during operation. As a result, the drive and charging components of electric vehicles must be able to carry these currents for a short period of time without the contacts opening with high power consumption due to the repulsion effect of the high currents.

Furthermore, the unintentional opening or closing of a circuit due to the high voltages and currents must be reliably prevented. This applies in particular for strong vibrations or shocks, such as can occur while driving an electric vehicle or in the event of an accident.

It is therefore the object of the invention to provide a high-voltage relay for a drive and/or charging circuit of an electric vehicle which enables safe operation of an electric vehicle even at high electrical voltages and high amperages and prevents unintentional opening or closing due to the effect of high acceleration (a > 50 g) of the circuit connected to the high-voltage relay.

This object is satisfied according to the invention in that the high-voltage relay comprises a magnetic drive assembly with two yokes spaced apart from one another and an armature which can be driven by the magnetic drive unit, wherein the armature is configured as a rocker which comprises two arms extending away from the first yoke and which can be tilted between an open position and a switching position and is mounted on a first one of the two yokes, wherein a first one of the two arms is provided with a switching contact assembly and wherein a magnetic circuit comprising the two yokes is closed in the switching position by the second arm.

The high-voltage relay according to the invention satisfies the above object in a simple manner. Due to the configuration as a rocker, both arms can be accelerated equally in the event of an external disturbance, for example an impact. The forces on both arms can then cancel each other out. This can prevent unintentional switching to the switching position or to the open position. The relay is therefore impact resistant.

Due to the fact that both arms perform different tasks, safety can also be increased because the second arm can be associated only with closing the magnetic circuit, while the first arm is responsible for switching the switching contacts of the high-voltage relay. Due to the configuration as a rocker, a spatial separation can be effected. Since the rocker is mounted at, in particular, on the first one of the two yokes, it can be drawn with its tilt axis toward the first yoke and supported thereon when the magnetic circuit is closed. At the same time, the second arm closes the magnetic circuit by bearing against the second yoke. High mechanical stability of the high-voltage relay is achieved by this arrangement. The high-voltage relay according to the invention can be used for the typical charging voltages of <1000 V and beyond. In addition, it can carry currents of up to 15 kA for a short period of time, wherein the short period of time denotes a period of less than 2 ms.

The solution according to the invention can be further improved by various configurations that are advantageous on their own and can be combined at random. These configurations and the advantages associated therewith shall be described hereafter.

The two arms preferably extend not only away from the first yoke but also away from each other.

The magnetic drive unit preferably comprises a core. In addition, the magnetic drive unit can comprise a coil body that surrounds the core at least in part and has at least one coil winding.

The two yokes are preferably joined together by the core and spaced apart by it. The two yokes extend to be preferably substantially transverse to a longitudinal axis of the core. The core can be part of the magnetic circuit.

In the switching position, the magnetic circuit preferably comprises the second arm, the two yokes, and the core.

The rocker can be configured to be V-shaped. Imaginary extensions of both arms can there enclose acute angles with a longitudinal axis of the core. The second arm, which closes the magnetic circuit in the switching position, is in the switching position preferably disposed parallel to the longitudinal axis of the core on the two yokes. The second arm is preferably free of a switching contact assembly.

In order to space the switching contact assembly from the magnetic circuit, the first arm preferably projects over the magnetic drive unit. In other words, the first arm projects beyond the second yoke over the first yoke.

The high-voltage relay can be configured in particular to hold the respective switching position without switching over unintentionally, even in the event of impacts of up to 90 g. "g" stands for the gravitational acceleration of 9.81 m/s². The impact resistance can be obtained in particular by the armature being configured as a rocker.

In order to obtain a good balance of the rocker and to make the relay even more impact resistant, the moments of inertia of both arms in relation to a tilt axis of the rocker are preferably equal. The term "equal" means that the deviation is no more than 10%. A center of gravity of the rocker, when viewed along the longitudinal axis of the core, is preferably at the height of the tilt axis. When viewed along a longitudinal axis of the core, the tilt axis is preferably at the height of the first yoke.

The armature is preferably configured to roll along, in particular, on the first yoke from the open position to the switching position. An even and smooth transition from the open position to the switched position can be achieved by the rolling motion. In addition, an external support or carrying structure to support the armature against the strong magnetic field of the core may be unnecessary. Instead, the armature supports itself on the first yoke as it rolls. The armature can have a semi-circular profile on the side facing the first yoke to facilitate rolling. The semicircular profile is preferably disposed at the height of the tilt axis.

As an alternative to the semicircular profile on the armature, there can be a semicircular profile at the yoke, along which the armature can roll.

An air gap can be present between the armature and the first yoke, at least in the open position. This can be advantageous for preventing remanence magnetization of the armature. Instead of an air gap, a lubricant can be present between the armature and the first yoke. As a result, the abrasion from the armature and/or from the first yoke during operation and thus the wear on the high-voltage relay can be reduced or avoided.

The switching contact assembly can comprise at least one switching contact and at least one insulating element by which the switching contact is insulated at least from the second arm. The insulating element is preferably disposed between a metal part of the first arm and the switching contact. The at least one switching contact is thereby insulated from the remainder of the armature. The insulating element is preferably made of plastic material, at least in sections.

The at least one switching contact is preferably permanently connected in an electrically conductive manner to a load terminal of the high-voltage relay. For this purpose, the at least one switching contact can be connected, for example, by way of a flexible electrical conductor, to the load terminal of the high-voltage relay. The flexible electrical conductor can be, for example, strand, a stranded cable, a braided cable, or a bundle of thin copper sheets, as is known from contacting movable welding heads. As an alternative to this, the flexible conductor can be formed by a resiliently deflectable conductor.

In order to be able to conduct, in particular, high currents, the switching contact assembly preferably comprises two switching contacts which are each permanently connected to the same load terminal of the high-voltage relay. Both switching contacts are there preferably connected to a common load terminal, each with a dedicated flexible conductor. Due to the division into two switching contacts, the amperage per contact can be halved. Halving the amperage per contact has the advantage that the electromagnetic repulsion of the switching contacts from their mating contacts at high currents is reduced. This in turn means that less magnetic attraction of the magnetic drive assembly is required to hold the armature in the switching position. This in turn can lead to a lower demand for coil current in the coil body.

The high voltage relay can comprise a locking device, wherein the armature is prevented by the locking device from performing a motion away from the first yoke at least beyond a predetermined amount. In other words, the armature can be arranged between the locking device and the first yoke. The locking device can prevent the armature from moving away from the remainder of the magnetic drive assembly in the event of mechanical shock or vibration.

A locking device of a particularly simple configuration can be obtained when the high-voltage relay furthermore comprises a housing and the locking device comprises at least one projection on the armature, in particular along the tilt axis, and a barrier on the housing configured for the projection to bear against. As an alternative to this, the housing can comprise at least one projection configured to bear against the armature.

The invention shall be explained hereafter in more detail by way of example using an advantageous embodiment with reference to the drawings. The combination of features shown by way of example in the embodiment can be supplemented by further features in accordance with the above explanations in accordance with the properties of the high-voltage relay according to the invention that are necessary for a specific application. Individual features can also be omitted in the embodiment described subject to the above explanations where the effect of this feature is irrelevant in a specific case of application. The same reference numerals in the drawings are always used for elements having the same function and/or the same structure,
where:
- Fig. 1: shows a schematic representation of a high-voltage relay according to the invention in the switching position;
- Fig. 2: shows a schematic representation of the high-voltage relay from Figure 1 in the open position;
- Fig. 3: shows an advantageous embodiment of a high-voltage relay according to the invention in a top view;
- Fig. 4: shows a perspective representation of the high-voltage relay from Figure 3 in a perspective view;
- Fig. 5: shows the switching contact assembly of the high-voltage relay from Figure 3 in a perspective view;
- Fig. 6: shows the switching contact assembly from Figure 5 in a longitudinal sectional view;
- Fig. 7: shows the armature of the high-voltage relay from Figure 3 in a perspective view; and
- Fig. 8: shows a housing lower part of the high-voltage relay from Figure 3 in a perspective view.

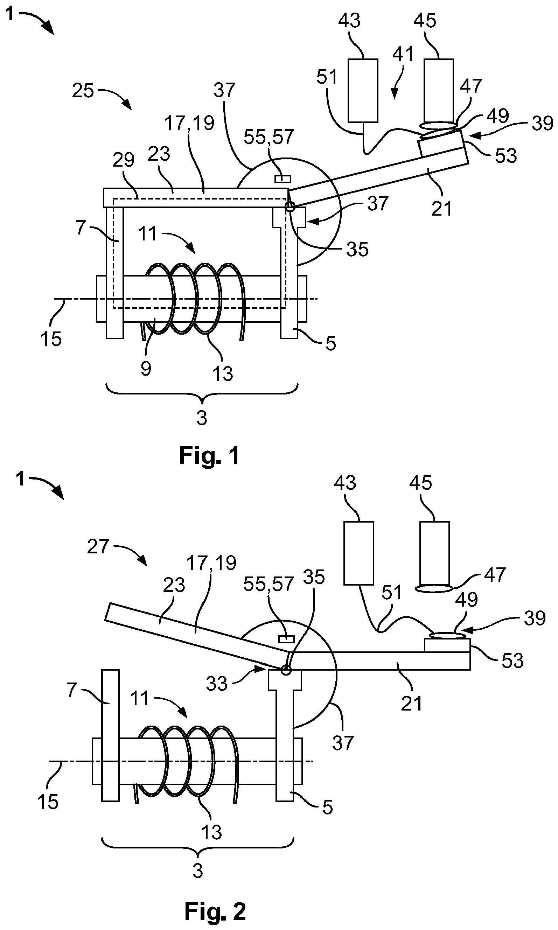

The basic structure and the function of a high-voltage relay 1 according to the invention shall first discussed hereafter with reference to Figures 1 and 2.

High-voltage relay 1 has a magnetic drive assembly 3. Magnetic drive assembly 3 comprises a core 9 and two yokes, namely a first yoke 5 and a second yoke 7.

In addition, the magnetic drive assembly can comprise a coil body 11 with at least one coil turn 13 which extends between two yokes 5 and 7 and around core 9.

Coil body 11 is used to generate a magnetic field in core 9. Since coil bodies are known, coil body 11 shall not be discussed further at this point.

Two yokes 5 and 7 and core 9 are preferably produced from a metallic material, in particular a ferromagnetic material.

Two yokes 5 and 7 are joined together by core 9 and spaced apart by it. Each of two yokes 5 and 7 extends to be preferably substantially transverse to a longitudinal axis 15 of core 9.

Magnetic drive assembly 3 serves to drive an armature 17 of high-voltage relay 1. Armature 17 is configured as a rocker 19 and comprises two arms extending away from one another, namely a first arm 21 and a second arm 23.

Armature 17 configured as a rocker 19 is mounted to be tiltable on first yoke 5. Armature 17 can be tilted to and fro between a switching position 25 and an open position 27. A load circuit can be closed by high-voltage relay 1 in switching position 25 and open in open position 27. This shall be discussed in detail further below.

In switching position 25, a magnetic circuit 29 can be closed by the second arm. Magnetic circuit 29 is indicated by dashed lines in Figure 1. Magnetic circuit 29 extends preferably through second arm 23, two yokes 5 and 7, and core 9.

When magnetic circuit 29 is closed, second arm 23 bears firmly against both yokes 5 and 7. Switching position 25 can be reached by applying a coil current in coil body 11. A magnetic field generated in core 9 then also extends through two yokes 5 and 7 and draws second arm 23 towards yokes 5 and 7.

In switching position 25, second arm 23 can be arranged parallel to longitudinal axis 15 of core 9. Second arm 23 preferably comprises no switching contacts.

First arm 21 preferably projects over magnetic drive unit 3. First arm 21 there preferably projects over coil body 11 of magnetic drive assembly 3. First arm 21 there preferably projects beyond the second yoke 7 over first yoke 5. In open position 27, first arm 21 can extend substantially parallel to longitudinal axis 15 of core 9.

Armature 17 is preferably configured to roll along first yoke 5 at least during a motion from open position 27 to switching position 25. As an alternative to this, armature 17 can also be mounted on a suspension, in particular a hinge or a correspondingly configured return spring, to be able to perform the tilt motion. First yoke 5 can be provided with a bearing 31 for armature 17 at which the cross section of first yoke 5 is enlarged. A sufficiently large contact surface for armature 17 can then be present.

In open position 27, there is preferably an air gap 33 present between armature 17 and first yoke 5. Instead of an air gap 33, there can also be a layer of lubricant present between armature 17 and first yoke 5. Due to the fact that armature 17 does not bear directly against first yoke 5 in open position 27, magnetic remanence in armature 17 can be prevented.

In order to facilitate the armature rolling along first yoke 5, the armature can be provided with a rounded shape, in particular with a semicircular profile, on its side facing first yoke 5, in particular in the region of a tilt axis 35 of armature 17. Alternatively, first yoke 5 can be provided with a corresponding profile which facilitates the motion of armature 17 on first yoke 5.

In order to move armature 17 from switching position 25 to open position 27 in an automated manner when the coil current in coil body 11 is switched off, armature 17 can be connected to a spring element 37 which generates a spring force in the direction of open position 27. In order to be able to move armature 17 safely to switching position 25 when the coil current is switched on, the spring force of spring element 37 is sufficiently small that it does not block armature 17.

First arm 21 is provided with a switching contact assembly 39. Switching contact assembly 39 is used to close a load circuit 41, at least a section of a load circuit 41 disposed in high-voltage relay 1. Such a section is indicated in Figure 1. Load circuit 41 can be in particular a drive and/or charging circuit 41 of an electric vehicle.

High-voltage relay 1 can comprise two load terminals 43 and 45. Electrical lines of load circuit 41 to be closed can be connected to load terminals 43 and 45. However, they are not part of high-voltage relay 1.

Load terminal 45 with a switching contact 47 connected thereto is shown merely by way of example. A second switching contact 49 is part of switching contact assembly 39 of high-voltage relay 1.

Switching contact 49 of switching contact assembly 39 is permanently connected in an electrically conductive manner to load terminal 43. The permanent electrically conductive connection between load terminal 43 and switching contact 49 is preferably established by way of a flexible electrical conductor 51. Flexible electrical conductor 51 can be, for example, a stranded wire or a braided cable.

Two switching contacts 47 and 49 bear against one another in switching position 25 so that an electrically conductive connection is established between two load terminals 43 and 45 via electrical conductor 51 and two switching contacts 47 and 49.

However, two switching contacts 47 and 49 are separated from one another in open position 27 so that no current flow can take place any longer. Switching contact assembly 39 comprises an insulating element 53 by with switching contact 49 of switching contact assembly 39 is electrically insulated from the remainder of armature 17, in particular from second arm 23. In addition, switching contact assembly 39 can comprise at least one contact spring (presently not shown) with which the contact pressure of switching contact 49 against switching contact 47 in switching position 25 is ensured.

In order to prevent high-voltage relay 1 from unintentionally closing load circuit 41, or to prevent an unwanted motion of armature 17 from open position 27 to switching position 25, the moments of inertia of both arms 21 and 23 are preferably substantially equal. The term "equal" is presently to mean that a deviation in the moments of inertia is preferably at most 10%.

Since first arm 21 is provided with switching contact assembly 39, material can be removed from arm 21 elsewhere on arm 21 in order to adapt the moment of inertia of first arm 21 to that of second arm 23. As an alternative to this, second arm 23 can be loaded with additional mass in order to adapt the moment of inertia of second arm 23 to that of first arm 21.

The same moments of inertia of arms 21 and 23 can lead to vibrations or shocks accelerating both arms 21 and 23 equally, so that there is no unwanted switching from one position to the other.

High-voltage relay 1 can comprise one or more locking devices 55 configured to prevent armature 17 from moving away from first yoke 5 beyond a predetermined amount. The predetermined amount can be such that armature 17 can move sufficiently far away from first yoke 5 to form air gap 33.

Locking device 55, which is only indicated as a small box in Figures 1 and 2, can prevent entire armature 17 from being accelerated away from magnetic drive assembly 3 in the event of a strong mechanical shock.

In the simplest case, locking device 55 consists of at least one barrier 57 which is arranged above armature 17 and prevents a motion away from magnetic drive assembly 3.

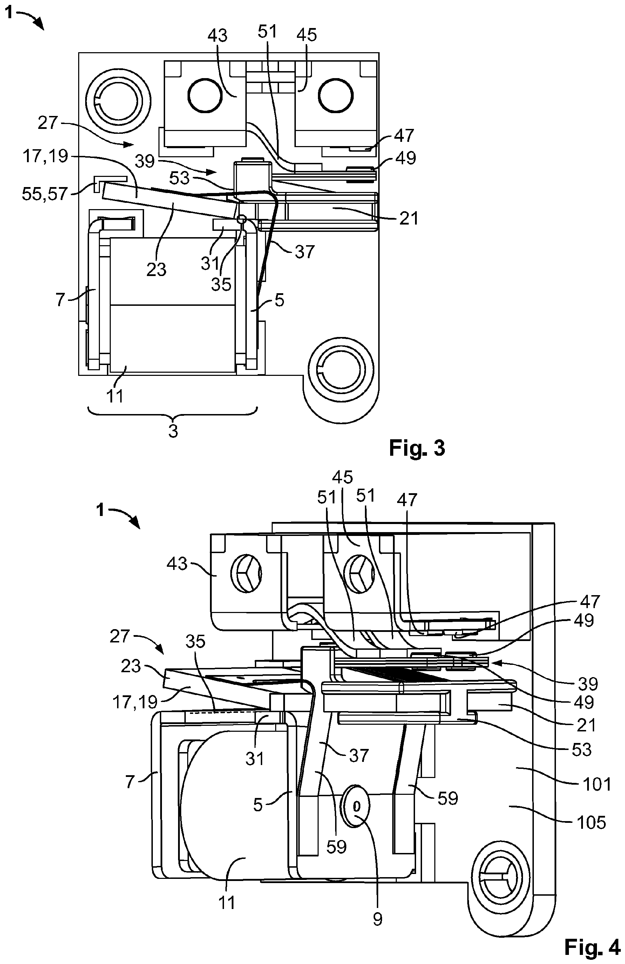

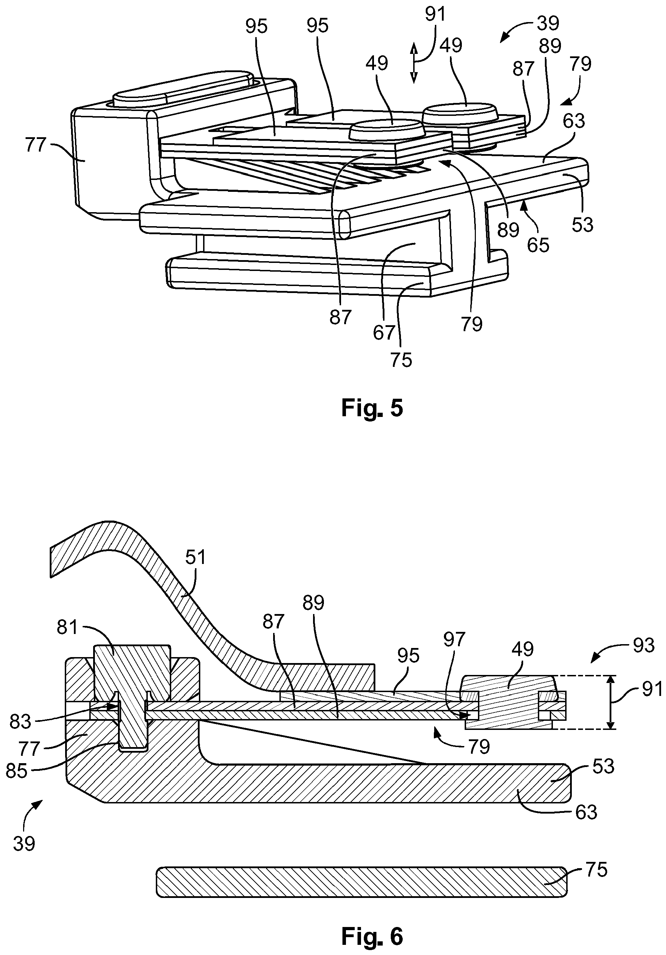

A preferred embodiment of a high-voltage relay 1 according to the invention shall be described hereafter with reference to Figures 3 to 8.

The basic structure of high-voltage relay 1 corresponds to high-voltage relay 1 described with reference to Figures 1 and 2. For the sake of brevity, only deviations from high-voltage relay 1 previously described or details that have not yet been mentioned shall be described below.

High-voltage relay 1 comprises a spring element 37 which is attached to first yoke 5 and to an upper side of second arm 23. Spring element 37 comprises two arms 59 which are spaced apart from one another along tilt axis 35 of armature 17 and which are each attached to first yoke 5.

A total width along tilt axis 35 of spring element 37 corresponds substantially to the width of armature 17 in the same direction. In order to reach the upper side of armature 17, the armature is therefore provided with two recesses 61 which are disposed opposite one another along tilt axis 35 and extend from the outside into the material of armature 17. Arms 59 of spring element 37 can extend through these recesses 61 between the upper side of armature 17 and first yoke 5.

First arm 21 is provided with a particularly advantageous embodiment of a switching contact assembly 39. It shall be discussed hereafter with reference to Figures 3 to 6.

Switching contact assembly 39 comprises insulating element 53 which is preferably produced from plastic material. Insulating element 53 is configured to be attachable to first arm 21. It comprises a base plate 63 which runs parallel to first arm 21 in the assembled state.

A web 67 extends on an underside 65 of base plate 63 that faces first arm 21 in the assembled state. In the assembled state, web 67 preferably runs parallel to a longitudinal extension of first arm 21.

Web 67 can be received in a clamping receptacle 69 in first arm 21 that is configured to be complementary to the former. Clamping receptacle 69 extends from an end of first arm 21 disposed opposite second arm 23 in the direction toward second arm 23 into the material of armature 17.

Web 67 can be pushed into clamping receptacle 69. Due to a retaining structure 71 on inner wall 73 in armature 17 defining clamping receptacle 69, web 67 can be held on first arm 21 in a frictionally-engaged and/or positive-fit manner.

A locking plate 75, which runs parallel to base plate 63, extends at one end of web 67 disposed opposite base plate 63. Locking plate 75 can bear against an underside of first arm 21 so that switching contact assembly 39 is held in a positive-fit manner on first arm 21 also in a direction extending transverse to tilt axis 35 and transverse to the longitudinal extension of first arm 21.

A spring retention structure 77 is arranged on a side of switching contact assembly 39 which in the mounted state on armature 17 is closer to tilt axis 35. Spring retention structure 77 is preferably formed monolithically with base plate 63.

Two contact springs 79 are held in spring retention structure 77. Each contact spring 79 carries a switching contact 49. Contact springs 79 have an overall flat shape and extend parallel to base plate 63, at least in open position 27. Contact springs 79 are spaced from base plate 63.

Contact springs 79 are received in spring retention structure 77. A holding part 81, for example, a respective holding part 81 for each contact spring 79, extends through a passage opening 83 in contact spring 79 into a receptacle 85 in spring retention structure 77. Holding part 81 can be clamped in receptacle 85. As a result, contact springs 79 are held reliably at the remainder of switching contact assembly 39.

Each contact spring 79 is preferably formed from several parts. According to an advantageous embodiment, each spring retention structure comprises an upper spring plate 87 and a lower spring plate 89. Both spring plates 87 and 89 are preferably formed from spring steel. Upper spring plates 87 and lower spring plates 89 of two contact springs 79 can alternatively each be formed monolithically. This means that an upper spring steel sheet, in particular a U-shaped spring steel sheet, forms the two upper spring plates 87. Correspondingly, a lower spring steel sheet, in particular a U-shaped spring steel sheet, can form the two lower spring plates. A single holding part 81 can then be sufficient for attaching the two spring steel sheets to spring retention structure 77.

Since contact springs 79 are intended to be movable along a contacting direction 91 in a resilient manner, two spring plates 87 and 89 are preferably firmly connected to one another not along their entire length. Instead, they are held to be displaceable relative to one another at least at their end 93 disposed opposite spring retention structure 77. Contacting direction 91 extends to be perpendicular to the plate planes spanned by spring plates 87 and 89.

Upper spring plate 87 is provided with a contact plate 95 on its upper side so that upper spring plate 87 is arranged between contact plate 95 and lower spring plate 89. Contact plate 95 can be firmly connected to upper spring plate 87. However, this is not mandatory.

Contact plate 95 is preferably made of a material that is selected with regard to good electrical conductivity, for example, an alloy containing copper or an alloy containing aluminum.

Each of two contact plates 95 is connected in an electrically conductive manner to one of two flexible electrical conductors 51. For example, each conductor 51 can be welded, soldered, or riveted to associated contact plate 95.

Each switching contact 49 of a contact spring 79 is connected in an electrically conductive manner to contact plate 95 of that contact spring 79. In other words, each contact plate 95 establishes the electrical connection between an electrical conductor 51 and a switching contact 49.

A switching contact 49 extends through contact plate 95 and two spring plates 87 and 89 of its contact spring 79. For switching contact 49 not to prevent spring plates 87 and 89 from moving relative to one another, lower spring plate 89 is provided with a receptacle 97 for switching contact 49, the clear width of which is greater than the diameter of switching contact 49 in the region of lower spring plate 89. This allows switching contact 49 to be movable relative to lower spring plate 89. In contrast, switching contact 49 is preferably connected in a positive-fit manner to upper spring plate 87.

In switching position 25, switching contact assembly 39 is preferably moved so far from second arm 21 in the direction of switching contacts 47 that switching contacts 49 of switching contact assembly 39 already bear against switching contacts 47 of load terminal 45 before final switching position 25 has been reached.

In final switching position 25, first arm 21 with switching contact assembly 39 is moved so far in the direction of switching contacts 47 that contact springs 79 are deflected downwardly, i.e. in the direction towards base plate 63. As a result, a uniformly high contact pressure of switching contacts 49 upon switching contacts 47 can be ensured. The strong contact pressure also makes it possible to prevent very high currents from leading to electromagnetic repulsion of switching contacts 49 from switching contacts 47.

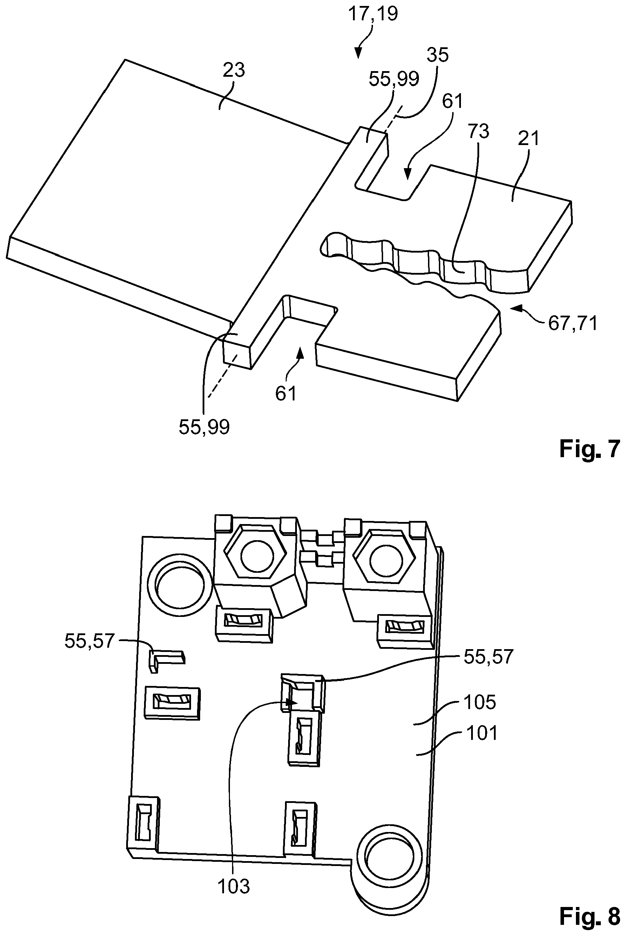

The armature is provided with two projections 99 that are disposed oppositely along tilt axis 35 and that are part of locking device 55. A housing 101 of high-voltage relay 1 is provided with a receptacle 103 for each of projections 99. Only a housing underside 105 of housing 101 with a receptacle 103 for a projection 99 is shown in Figure 8.

Receptacle 103 is defined by a barrier 57 which is part of locking device 55. A barrier 57 which prevents second arm 23 from moving away from magnetic drive unit 3 is likewise part of locking device 55. In this case, second arm 23 can be regarded as a projection of armature 17 which is prevented by barrier 57 from any unwanted motion.

### REFERENCE NUMERALS

- 1: high-voltage relay
- 3: magnetic drive assembly
- 5: first yoke
- 7: second yoke
- 9: core
- 11: coil body
- 13: coil turn
- 15: longitudinal axis
- 17: armature
- 19: rocker
- 21: first arm
- 23: second arm
- 25: switching position
- 27: open position
- 29: magnetic circuit
- 31: bearing
- 33: air gap
- 35: tilt axis
- 37: spring element
- 39: switching contact assembly
- 41: load circuit
- 43: load terminal
- 45: load terminal
- 47: switching contact
- 49: switching contact
- 51: electrical conductor
- 53: insulating element
- 55: locking device
- 57: barrier
- 59: arm
- 61: recesses
- 63: base plate
- 65: underside
- 67: web
- 69: clamping receptacle
- 71: retaining structure
- 73: inner wall
- 75: locking plate
- 77: spring retention structure
- 79: contact springs
- 81: holding part
- 83: passage opening
- 85: receptacle
- 87: upper spring plate
- 89: lower spring plate
- 91: contacting direction
- 93: end
- 95: contact plate
- 97: receptacle
- 99: projections
- 101: housing
- 103: receptacle
- 105: housing underside

## Claims

1. High-voltage relay (1) for a drive or charging circuit (41) of an electric vehicle, said high-voltage relay (1) comprising a magnetic drive assembly (3) with two yokes (5, 7) spaced apart from one another and an armature (17) which can be driven by said magnetic drive unit (3), wherein said armature (17) is configured as a rocker (19) which comprises two arms (21, 23) extending away from said first yoke (5) and which can be tilted between an open position (27) and a switching position (25) and is mounted on a first one (5) of said two yokes (5, 7), wherein a first one (21) of said two arms (21, 23) is provided with a switching contact assembly (39) and wherein a magnetic circuit (29) comprising said two yokes (5, 7) is closed in said switching position (25) by said second arm (23).

2. High-voltage relay (1) according to claim 1, wherein said first arm (21) projects over said magnetic drive unit (3).

3. High-voltage relay (1) according to claim 1 or 2, wherein said moments of inertia of both arms (21, 23) in relation to a tilt axis (35) of said rocker (19) are equal.

4. High-voltage relay (1) according to one of the claims 1 to 3, wherein said armature (17) is configured to roll along said first yoke (5) from said open position (27) to said switching position (25).

5. High-voltage relay (1) according to one of the claims 1 to 4, wherein said switching contact assembly (39) comprises at least one switching contact (49) and at least one insulating element (53) by which said switching contact (49) is insulated at least from said second arm (23).

6. High-voltage relay (1) according to claim 5, wherein said at least one switching contact (49) is permanently connected in an electrically conductive manner to a load terminal (43) of said high-voltage relay (1).

7. High-voltage relay (1) according to claim 6, wherein said at least one switching contact (49) is connected to said load terminal (43) of said high-voltage relay (1) via a flexible electrical conductor (51).

8. High-voltage relay (1) according to claim 6 or 7, wherein said switching contact assembly (39) comprises two switching contacts (49) which are each permanently connected to said same load terminal (43) of said high-voltage relay (1).

9. High-voltage relay (1) according to one of the claims 1 to 8, wherein said high-voltage relay (1) further comprises a locking device (55), wherein said armature (17) is prevented by said locking device (55) from performing a motion away from said first yoke (5) at least beyond a predetermined amount.

10. High-voltage relay (1) according to claim 9, wherein said high-voltage relay (1) further comprises a housing (101) and said locking device (55) comprises at least one projection (99) on said armature (17) and a barrier (57) on said housing (101) configured for said projection (99) to bear against.
